# EUROPÄISCHE PATENTSCHRIFT

(11) **EP 1 216 779 B1**
(45) Veröffentlichungstag und Bekanntmachung des Hinweises auf die Patenterteilung: **07.06.2006**
(21) Anmeldenummer: 00128147.6
(22) Anmeldetag: 21.12.2000
(51) Int. Cl.: B23H 7/02, B23Q 39/02, B23Q 1/01

(54) **Werkzeugmaschine, insbesondere Schneiderosionsmaschine sowie Modulbausatz**
Machine tool, in particular electroerosion machine and modular construction assembly
Machine-outil, en particulier machine pour usinage par électroérosion, et ensemble de construction modulaire

(43) Veröffentlichungstag der Anmeldung: 26.06.2002
(73) Patentinhaber: AGIE SA, 6616 Losone (CH)
(72) Erfinder: Wehrli, Peter, 6612 Ascona (CH)
(74) Vertreter: Niederkofler, Oswald

(56) Entgegenhaltungen:
- EP-A- 0 779 124
- PATENT ABSTRACTS OF JAPAN vol. 009, no. 229 (M-413), 14. September 1985 (1985-09-14) & JP 60 085828 A (INOUE JAPAX KENKYUSHO KK), 15. Mai 1985 (1985-05-15)

## Beschreibung

Die Erfindung betrifft eine Werkzeugmaschine, insbesondere eine Schneiderosionsmaschine zur Bearbeitung mittelgroßer bis sehr großer Werkstücke.

Unter den Werkzeugmaschinen sind Funkenerosionsmaschinen z.B. in Form von Schneid- und Senkerosionsmaschinen weit verbreitet. Es wird dabei ein Bearbeitungswerkzeug in Form einer Drahtelektrode (Schneiderosionsmaschine) oder einer Senkelektrode (Senkerosionsmaschine) relativ zu einem auf einem Arbeitstisch aufgespannten Werkstück bewegt, um eine elektrische Funkenentladung zwischen der Bearbeitungselektrode und dem Werkstück hervorzurufen. Der Aufbau der Maschine umfaßt im wesentlichen ein Maschinengestell mit einer Antriebskinematik zur Erzeugung der die Bearbeitungskontur bestimmenden Relativverschiebung zwischen Werkstück und Bearbeitungselektrode. Hierzu wird bei der Senkerosionsmaschine die Bearbeitungselektrode von einem einzelnen Führungskopf, bei der Schneiderosionsmaschine von einem oberen (erstes Werkzeugführungsmittel) und einem unteren Drahtführungskopf (zweites Werkzeugführungsmittel) geführt. Das Werkstück oder eine Gruppe von Werkstücken ist auf einem Arbeitstisch, dem Werkstückhaltemittel, mit geeigneten Spannmitteln befestigt. Für den speziellen Fall der Funkenerosionsmaschinen sind noch ein Generator für die Erzeugung und Steuerung der Funkenentladungen, eine CNC-Steuerung sowie Einrichtungen für die Spülung des Arbeitsspaltes und der Aufbereitung einer ggf. verwendeten Arbeitsflüssigkeit vorhanden.

Die Besonderheit von Schneiderosionsmaschinen gegenüber sonst üblichen Werkzeugmaschinen (Fräs-, Bohr-, Kreissäge- oder Laserschneidmaschinen, etc.) besteht also darin, daß das Werkzeug, die Drahtelektrode, auf beiden Seiten des Werkstücks geführt werden muß (an einer ersten und einer zweiten Führungsposition). Diese Eigentümlichkeit findet sich sonst beispielsweise noch bei Drahtsägemaschinen (z.B. Diamantdrahtsägen) sowie Bandsägemaschinen, etc. Bei den Schneiderosionsmaschinen können die beiden Drahtführungsköpfe dabei auf unterschiedlichen Bahnen bewegt werden, um konische Schnitte zu erzeugen. Schneiderosionsmaschinen weisen deshalb üblicherweise zwei Bewegungsachsen X und Y (zwei orthogonal zueinander stehende Richtungen in einer ersten Bewegungsebene) zum Erzeugen der Hauptkontur, zwei Bewegungsachsen U und V zur Neigung der Drahtelektrode (zwei weitere orthogonal zueinander stehende Richtungen in einer zweiten Bewegungsebene) und eine Z-Achse zur Anpassung an die Werkstück- bzw. Schnitthöhe auf.

Werkzeugmaschinen und vor allem Funkenerosionsmaschinen sind vielfältig einsetzbar. Daher haben sich im Laufe der Zeit verschiedene Bauformen abhängig von den jeweiligen Anforderungen, wie Verkaufspreis, Unterhaltskosten, Werkstückgröße und maximale Verfahrwege, Qualität, Produktivität, Flexibilität und Automatisierbarkeit, Platzbedarf, Bedienungskomfort, usw. entwikkelt. Der Schwerpunkt bei der Entwicklung einer Werkzeugmaschine kann daher ganz unterschiedlich gesetzt werden. Häufig sind derartige Anforderungen auch gegenläufig, wie etwa der Platzbedarf der Maschine einerseits und die maximal zulässige Werkstückgröße andererseits. Es wäre gerade im letztgenannten Fall wünschenswert, eine möglichst kompakte Bauweise zu haben, trotzdem aber auch größere Werkstücke bearbeiten zu können. Diesen Anforderungen werden z.B. die bisher bekannten Bauformen für Funkenerosionsmaschinen nur im beschränkten Masse gerecht.

Nachfolgend werden die in der vorliegenden Beschreibung verwendeten Begriffe für die Bezeichnung bestimmter Bauformen anhand spezieller Beispiele bei Funkenerosionsmaschinen erläutert. So wird bei den Funkenerosionsmaschinen insbesondere zwischen einem C-Maschinengestell und einem Portalgestell unterschieden. Bei zwei speziellen Beispielen für das C-Maschinengestell führt entweder der Arbeitstisch die Horizontalbewegungen aus und der Elektrodenführungskopf nur die Vertikalbewegung (C-Gestellmaschine), oder es werden sämtliche horizontale und vertikale Maschinenbewegungen vom Elektrodenführungskopf ausgeführt (Konsolmaschine). Hierfür wird ein sogenannter Kreuzschlitten an dem Maschinengestell befestigt, dessen erste bezüglich des Maschinengestells bewegliche Einheit lediglich an einem Ende an dem Maschinengestell aufgehängt bzw. geführt ist. Die C-Gestellmaschine wird im leichten bis mittleren, die Konsolmaschine im mittleren bis schweren Werkzeug- und Formenbau eingesetzt. Das Portalgestell weist eine höhere Starrheit und ein höheres Dämpfungsvermögen als das C-Maschinengestell, da die erste bewegliche Einheit an ihren beiden Enden bezüglich des Maschinengestells geführt wird und so das sogenannte Portal ausbildet. Es wird insbesondere für extreme Werkstücks- und Elektrodengewichte bevorzugt. Teilweise wird es aber auch dort eingesetzt, wo eine höhere Genauigkeit erwartet wird.

Grundsätzlich wird die Relativbewegung zwischen Werkzeug und Werkstück entweder durch Bewegung des Arbeitstisches, oder durch Bewegung des Elektrodenführungskopfes, oder durch eine Kombination von Bewegungen des Arbeitstisches und des Elektrodenführungskopfes ausgeführt.

Bei einer Schneiderosionsmaschine in Portalbauweise besteht das Maschinengestell im allgemeinen aus einem Maschinenbett und zwei darauf angeordneten Ständern sowie einem Querträger, die zusammen einen Portalträger bilden. Dadurch ergibt sich gegenüber der C-Gestellbauweise eine höhere Steifigkeit und eine homogenere Dehnung bei Temperaturschwankungen. Man unterscheidet weiterhin zwischen den Werkzeugmaschinen mit feststehendem und mit beweglichem Portalträger. Bei Festportalmaschinen ist ein Arbeitstisch samt Arbeitsbehälter auf dem Maschinenbett in eine Hauptachsenrichtung, z.B. die X-Richtung, sozusagen durch den Portalträger hindurch verfahrbar angeordnet. Die Y-Hauptachsenbewegung der Drahtelektrode ist davon entkoppelt und wird durch einen Y-Schlitten bewirkt, der auf dem Querträger oberhalb des Arbeitsraumes horizontal verfahrbar ist. Das Werkstück wird somit nur in eine Achsrichtung bewegt. Maschinengestell bzw. Bett, Ständer und Querträger bilden eine ruhende Einheit. Der untere Drahtführungskopf ist hier typischerweise über einen L-förmigen unteren Tragarm am oberen Y-Schlitten befestigt. Dieser Tragarm wird gerade bei größeren Maschinen recht lang, wodurch er aufgrund der langen Dehnungsstrecke relativ sensibel auf Krafteinwirkungen und thermische Schwankungen reagiert. Zudem nehmen Anlagen mit einem derart ausgebildeten Tragarm einen großen Platz ein.

Es sind weiterhin sog. Gantry-Maschinen bekannt, bei denen das Werkstück während der Bearbeitung ruht und auch die zweite Hauptachsenbewegung auf das Werkzeug verlagert wird. Hierbei wird entweder der gesamte Portalträger samt Ständer bezüglich des Maschinengestells in X-Hauptachsenrichtung bewegt, oder aber nur dessen Querträger. Der Vorteil der Gantry-Maschinen liegt darin, daß die bewegte Masse unabhängig von dem Bearbeitungsfortschritt oder dem jeweilig zu bearbeitenden Werkstück konstant bleibt. Eine solche Schneiderosionsmaschine mit beweglichem Portal ist beispielsweise aus der DE 20 52 123 bekannt. Ein weiteres Beispiel der Gantry-Bauform, diesmal auf dem Gebiet der Fräsmaschinen, ist in der EP 0 712 683 beschrieben. Hier sind die beiden Ständer sozusagen als Wände ausgebildet, und darauf sind Führungen zur Bewegung des Querträgers angeordnet.

Aus der US 4,992,640 ist eine Schneiderosionsmaschine bekannt, mit einem oberen Drahtführungskopf in Portalbauweise, einem feststehenden unteren Drahtführungskopf und einem auf einem Kreuzschlitten bewegbaren Werkzeugtisch. Die JP 63-306829 zeigt ferner eine Schneiderosionsmaschine mit einem oberen Drahtführungskopf in Portalbauweise, einem ruhenden Werkstück und einem unteren Drahtführungskopf, der in Portalbauweise fest mit dem oberen Drahtführungskopf gekoppelt ist. Insofern ist zumindest eine Bewegung des oberen Drahtführungskopf, z.B. in X-Hauptachsenrichtung, immer fest mit der Bewegung, z.B. in U-Richtung, des unteren Drahtführungskopf gekoppelt. Lediglich die Y-Hauptachsenbewegung bzw. die V-Bewegung der beiden Drahtführungsköpfe sind unabhängig voneinander.

Die JP 61-34622, JP 61-168426 und JP 61-168424 zeigen Schneiderosionsmaschinen, bei denen das Werkstück ruht und der obere und der untere Drahtführungskopf jeweils als unabhängig voneinander verfahrbare Kreuzschlitten ausgebildet sind. Der Nachteil dieser Kreuzschlittensysteme ist, daß die Außenabmessungen der Maschine aufgrund der langen Verfahrwege der Kreuzschlitten im Verhältnis zu den maximal zu bearbeitenden Werkstückgrößen nachteilig sehr groß sind.

Die gattungsgemäße EP-A-779 124 zeigt eine Schneiderosionsmaschine mit einem unteren und einem oberen Portalträger für den jeweiligen Drahtführungskopf. Der untere Drahtführungskopf ist mitsamt seinen Führungen und Antrieben vollständig im Arbeitsbehälter aufgenommen.

Die Erfindung zielt darauf ab, eine gattungsgemäße Werkzeugmaschine dahingehend weiterzuentwickeln, daß die maximal zu bearbeitende Werkstückgröße bzw. die Verfahrwege in einem günstigen Verhältnis zu den Abmessungen des Arbeitsbehälters stehen.

Die Erfindung erreicht dieses Ziel durch den Gegenstand des Anspruchs 1. Vorteilhafte Ausgestaltungen davon sind in den jeweiligen abhängigen Ansprüchen beschrieben.

Die Erfindung sowie weitere Vorteile und Merkmale der Erfindung werden nunmehr anhand bevorzugter Ausführungsformen mit Bezug auf die beigefügte Zeichnung näher erläutert. In der Zeichnung zeigen
- Fig. 1: in schematischer Darstellung eine perspektivische Ansicht einer bevorzugte Ausführungsform der Erfindung in Form einer Schneiderosionsmaschine,
- Fig. 2: eine Seitenansicht der in der Figur 1 gezeigten Ausführungsform,
- Fig. 3: eine Vorderansicht der in der Figur 1 gezeigten Ausführungsform, und
- Fig. 4: eine Aufsicht auf die in der Figur 1 gezeigten Ausführungsform.

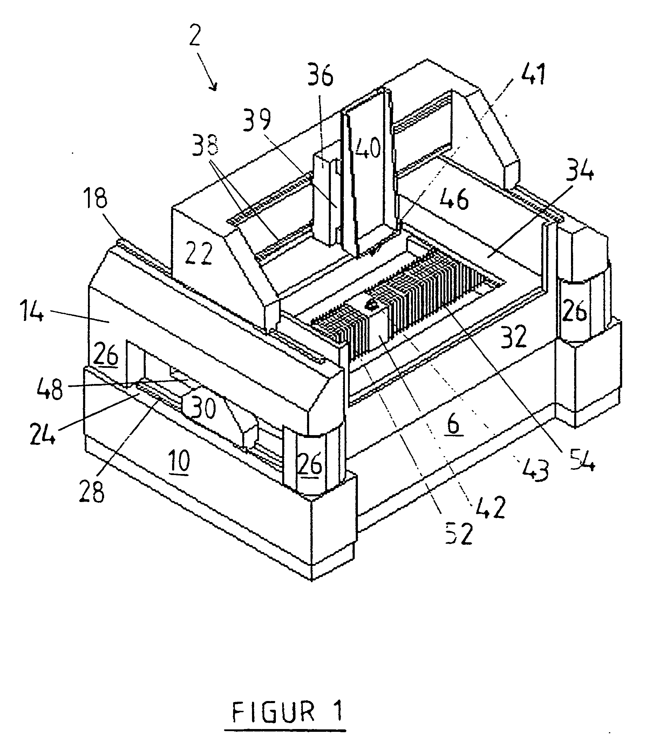

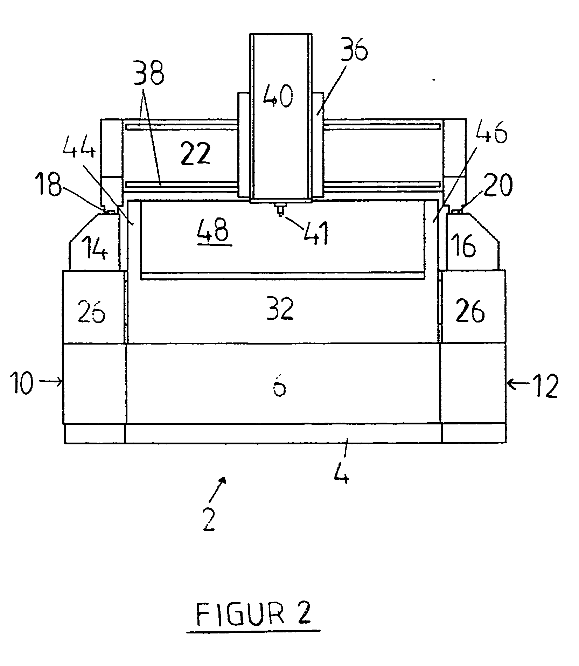

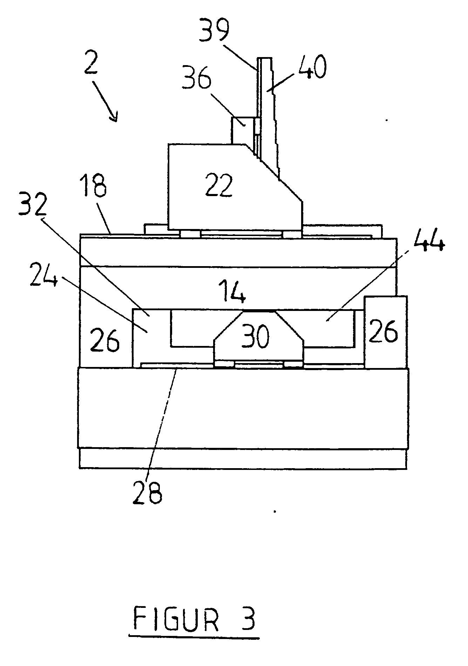

In den Figuren 1 bis 4 bezeichnen gleiche Bezugszeichen gleiche Teile. Weiterhin sind die nachfolgend verwendeten Begriffe "oben", "unten", "horizontal" und "vertikal" nicht einschränkend zu verstehen, sondern dienen lediglich der leichteren Lesbarkeit der Beschreibung.

Die Erfindung wird nunmehr anhand einer speziellen Schneiderosionsmaschine im Detail beschrieben. Dies ist jedoch nicht einschränkend zu verstehen, da sich auch andere Werkzeugmaschinen mit dem erfindungsgemäßen Baukonzept ausrüsten lassen, bei denen das Werkzeug an zwei unterschiedlichen Führungspositionen unabhängig voneinander geführt werden muß (z.B. Draht- oder Bandsägen, etc.).

Gemäß dem in den Figuren 1 bis 4 gezeigten bevorzugten Ausführungsbeispiel umfaßt die Schneiderosionsmaschine ein Maschinengestell 2, das auf einem in etwa quaderförmigen Maschinenbett 4 ruht. Das Maschinenbett 4 weist eine Vorderseite 6, eine Rückseite 8 und zwei Seitenflächen 10 und 12 auf. Auf beiden Seitenflächen 10 und 12 des Maschinenbettes 4 ist je eine Seitenwand 14 und 16 angeordnet, die sich nach oben, bevorzugt bis etwa zum Niveau der maximalen Werkstückhöhe hinaus erstreckt. Auf den oberen Rändern der Seitenflächen 14 und 16 sind horizontal in Längsrichtung der Ränder verlaufende Führungen 18 und 20 für einen oberen ersten Querträger 22 eines Portalträgers angeordnet. In den Seitenwänden 14 und 16 sind fensterförmige Ausnehmungen 24 vorgesehen, welche ebenfalls horizontal in Längsrichtung der Seitenwände 14 und 16 verlaufen. Die Ausnehmungen 24 sind in Längsrichtung so bemessen, daß an den Außenseiten der Seitenflächen 14 und 16 nur noch säulenförmige Abschnitte 26 stehen bleiben. Auf den unteren Fensterrändern, insbesondere unmittelbar auf dem Maschinenbett 4, der fensterförmigen Ausnehmungen 24 liegen zwei weitere Führungen 28 für einen unteren zweiten Querträger 30. Dank dieser fensterförmig ausgebildeten Ausnehmungen läßt sich die Baubreite der Schneiderodiermaschine um einige 100 mm reduzieren.

In einer alternativen, nicht dargestellten Ausführungsform können die Führungen 28 für den unteren Querträger auch lateral an der jeweiligen Seitenwand 14 und 16 oder direkt auf dem Maschinenbett 4 angeordnet sein, wobei in diesem Fall die Ausnehmungen 24 weggelassen werden können. Werden die Seitenwände 14 und 16 ganz weggelassen, so können in einer weiteren alternativen Ausführungsform die beiden Führungen 18 und 20 für den oberen Querträger 22 jeweils auf einem seitlichen Querbalken befestigt sein, der wiederum über eine vordere und eine hintere Säule auf dem Maschinenbett 4 abgestützt ist. Hierdurch ergeben sich zwei Brücken. Unter den beiden Brücken ergibt sich somit zum Arbeitsraum hin eine Öffnung. Die beiden Führungen 28 für den unteren Querträger können dann an der Unterseite des jeweiligen Querbalkens aufgehängt oder alternativ direkt auf dem Maschinenbett 4 in der Öffnung angeordnet sein. Außerdem können die beiden Seitenwände 14 oder 16 oder Brücken auf der Rückseite 8 vorteilhaft durch eine Rückwand (nicht dargestellt) verbunden werden, welche eine zusätzliche Stützwirkung erbringt. In diesem Fall bietet sich diese Rückwand gleich als Teil des Arbeitsbehälters an (siehe unten). Alternativ können die auf beiden Seiten 10 und 12 des Maschinenbettes 4 angeordneten Brücken durch zumindest eine weitere, auf der Rückseite 8 und/oder der Vorderseite 6 angeordnete weitere Brücke verbunden werden, wodurch - wie oben - eine höhere Steifigkeit erreicht wird. Die sich dann ergebenden Öffnungen an der Vorderseite 6, oben und an der Rückseite 8 bieten sich dann zum Laden und Entladen der Werkstücke oder Paletten mit aufgespannten Werkstücken an.

Die in den Figuren 1 bis 4 dargestellte Ausführungsform zeigt einen konzeptbedingten Vorteil der Gantry-Bauweise. Die Führungen 18 und 20 können mit geringem Aufwand derart nach hinten verlängert werden, daß der obere erste Querträger 22 in seiner hintersten Position den Arbeitsraum soweit freigibt, daß das Beladen (z.B. mit einem Kran, einem Gabelstapler oder sonstigen Hilfsmitteln) großer Werkstücke wesentlich erleichtert wird.

Große Drahterodiermaschinen gemäß der erfindungsgemäßen Bauform nutzen die Bodenfläche optimal, weil die Hauptachsen X_{oben} bzw. Xᵤₙₜₑₙ seitlich neben dem Arbeitsraum angeordnet sind und die Hauptachsen Y_{oben} bzw. Yᵤₙₜₑₙ über bzw. unter dem Werkstück, direkt im Arbeitsraum angeordnet sind.

Gegenüber bekannten Konzepten sehr großer Drahterodiermaschinen liegt ein weiterer Vorteil der bevorzugten Bauform darin, daß die Aufspannfläche für das Werkstück auf einer ergonomisch idealen Höhe von etwa 1100 mm zu liegen kommt. Die ist deshalb möglich, weil die Steifigkeit des Maschinengestells 2 nicht vom Querschnitt (Flächenmoment) des Maschinenbetts abhängt.

Bekanntlich wird die hochgenaue Funkenerosionsbearbeitung meist in einem Bad aus einer dielektrischen Arbeitsflüssigkeit zum Spülen des Arbeitsspaltes und zur thermischen Stabilisierung des Werkstückes ausgeführt. Hierfür weist die Schneiderosionsmaschine einen Arbeitsbehälter 32 zur Aufnahme der Arbeitsflüssigkeit auf, der den Arbeitsraum umgibt und vor jeder Bearbeitung mit der Arbeitsflüssigkeit aufgefüllt wird. Nach Beenden der Bearbeitung wird die Arbeitsflüssigkeit aus dem Arbeitsbehälter 32 abgelassen und der Arbeitsbehälter 32 zum Be- und Entladen des Werkstückes geöffnet. Für diesen Fall wird der Arbeitsbehälter 32 entsprechend gestaltet, z.B. mit einer ersten (nicht explizit dargestellten) ggf. automatisch betätigbaren Tür an der Vorderseite 6 und/oder einer zweiten (ebenfalls nicht explizit dargestellten) ggf. automatisch betätigbaren Tür an der Rückseite 8.

Bei entsprechender Gestaltung des Maschinengestells 2 bleibt unterhalb des Arbeitsraumes ein gewisses Volumen verfügbar, in welchem Module der Schneiderosionsmaschine, z.B. die Einheit zur Aufbereitung der Arbeitsflüssigkeit, teilweise oder vollständig untergebracht werden können. Dadurch ergibt sich eine bessere Raumnutzung und bessere Integration der Schneiderosionsmaschine selbst, was wiederum wirtschaftliche Vorteile mit sich führt. Bei den Schneiderodiermaschinen mit Bad wird der Freiraum im Maschinengestell 2 besonders vorteilhaft zur Unterbringung der Arbeitsflüssigkeit in einem entsprechenden Behälter (nicht dargestellt) bei der Entleerung des Arbeitsbehälters 32 verwendet. Die Arbeitsflüssigkeit, welche auf etwa +/- 0.5 Grad genau geregelt werden kann, trägt dann vorteilhaft zur thermischen Stabilisierung des Maschinengestells 2 bei. Gerade in diesem Fall wird vorzugsweise zumindest das Maschinenbett 4 aus Polymerbeton hergestellt.

Bevorzugt umfaßt die Schneiderosionsmaschine innerhalb des Arbeitsbehälters 32 ein Werkstückhaltemittel in Form eines plattenförmigen Werkstück-Aufspannrahmens 34 mit einem im wesentlichen rechteckförmigen Ausschnitt. Zumindest ein Teil des Werkstück-Aufspannrahmen 34 kann an den beiden Seitenwänden 14 und 16 bzw. Brücken oberhalb der Durchführungen des unteren zweiten Querträgers 30 durch die Seitenwände des Arbeitsbehälters 32 befestigt sein. Der Pfad der Gravitationskraft des Werkstücks zum Boden wird damit sehr kurz. Vorteilhaft wird der Werkstück-Aufspannrahmen 34 damit zumindest teilweise in das Maschinengestell 2 integriert. In diesem Fall kann der Werkstück-Aufspannrahmen 34 ebenfalls teilweise aus Polymerbeton bestehen. Auch andere Teile, z.B. die beiden Seitenwände 14 und 16 und sogar die beiden Querträger 22 und 30 können aus Polymerbeton gefertigt werden.

Drahterodiermaschinen, insbesondere jene, die zur Bearbeitung großer Werkstücke eingesetzt werden, werden häufig manuell eingerichtet. Dies ist nicht unwirtschaftlich, da die Bearbeitungszeit bei großen Werkstücken ohnehin viel länger als die Einrichtzeit ist. Bereits bei Maschinen mittlerer Größe ist es für den Operateur umständlich, an jeden Punkt des Arbeitsraumes zu gelangen. Der Zugang und der Arbeitsbehälter 32 müssen deshalb so gestaltet werden, daß der Operateur entweder unmittelbar an den Werkstück-Aufspannrahmen 34 herankommt, oder daß er bei besonders großen Maschinen direkt den Arbeitsraum bzw. den Arbeitsbehälter 32 betreten kann.

Entlang des oberen ersten Querträgers 22 des oberen Portalträgers ist ein oberer erster Schlitten 36 z.B. in die X_{oben-}Richtung verfahrbar. Hierzu sind in dem gezeigten Ausführungsbeispiel spezielle Führungen 38 zum Führen des Schlittens 36 an der vorderen Seitenwand des Querträgers 22 angebracht. Der obere erste Querträger 22 ist orthogonal zum oberen ersten Schlitten 36, in die Y_{oben}-Richtung verfahrbar. An dem oberen ersten Schlitten 36 ist wiederum über entsprechende vertikal verlaufende Führungen 39 eine Pinole 40 befestigt, die zur Anpassung an die Werkstückhöhe in Z-Richtung verfahrbar ist. Am unteren Ende der Pinole 40 ist ein oberer Drahtführungskopf 41 befestigt. Insgesamt wird der obere Drahtführungskopf 41 somit wie der Arbeitskopf eines klassischen Gantry-Bearbeitungszentrums bewegt.

Ein unterer Drahtführungskopf 43 wird nun, unabhängig vom oberen Drahtführungskopf 41, mit separaten Führungs- und Antriebsmitteln bewegt. Hierzu ist ein unterer zweiter Schlitten 42 vorgesehen, der entlang der Längsrichtung des unteren zweiten Querträgers 30, parallel zur X_{oben}-Richtung, in die Xᵤₙₜₑₙ₋Richtung verfahrbar ist. Der untere Querträger 30 ist orthogonal zum unteren Schlitten 42 und parallel zur Y_{oben}-Richtung, in die Yᵤₙₜₑₙ-Richtung verfahrbar. Der untere Querträger 30, welcher den klassischen L-förmig auskragenden Drahtführungsarm ersetzt, ist wie der obere Querträger 22 beidseitig abgestützt und geführt. Er wird somit ebenfalls wie der Arbeitskopf eines klassischen Gantry-Bearbeitungszentrums bewegt. Der untere Drahtführungskopf 43 ist nunmehr an dem unteren Schlitten 42 befestigt. Insgesamt wird also das Werkzeug, die Drahtelektrode, bei ruhendem Werkstück an zwei verschiedenen Führungspositionen, an dem unteren 43 und dem oberen Drahtführungskopf 41, jeweils mit einem verfahrbaren Portalträger 22 und 30 mit verfahrbarem Schlitten 36 und 42 geführt, im Sinne einer Doppelgantry-Werkzeugführung bzw. einem modifizierten Gantry-Maschinengestell, bei dem Maschinenbett 4, Arbeitstisch und/oder Aufspannrahmen 34, Arbeitsbehälter 32 und Werkstück stationär bleiben. Die beiden Drahtführungsköpfe 41 und 43 werden unabhängig voneinander, unterhalb und oberhalb des Werkstückes bewegt, wodurch beliebige zylindrische und konische Schnittkonturen erzeugt werden können. Dieser Aufbau ist von dem aus dem Stand der Technik bekannten Aufbau zu unterscheiden, bei dem zwei verschiedene Werkzeuge jeweils mittels einer Gantry-Werkzeugführung das selbe Werkstück gleichzeitig bearbeiten. Diese werden im Stand der Technik auch als sogenannte Twin-Gantry-Werkzeugmaschinen bezeichnet.

Für die Bewegung des oberen Querträgers 22, des oberen Schlittens 36 und der Pinole 40 stehen getrennte Antriebe zu Verfügung. Dies gilt gleichfalls für den unteren Schlitten 42 und den unteren Querträger 30. Der weitaus größte Teil der Achsantriebe heutiger NC-Werkzeugmaschinen verwendet Servomotoren in Verbindung mit Kugelgewindespindeln und einem direkten oder einem indirekten Meßsystem. In Zusammenhang mit der Erfindung lassen sich sowohl die weit verbreiteten Kugelgewindespindel-Antriebe als auch Direktantriebe einsetzen. Bei der Drahterosion werden nur kleine Achsgeschwindigkeiten erreicht, an der Bearbeitungsstelle erfolgen jedoch häufig kurzhübige vor- und rückwärtsgerichtete Relativbewegungen. Deshalb wird beim vorliegenden Maschinenkonzept bevorzugt ein zum Makroantrieb überlagerter Mikroantrieb zur präzisen und hochdynamischen Positionierung der Drahtführungsköpfe 41 und 43 eingesetzt.

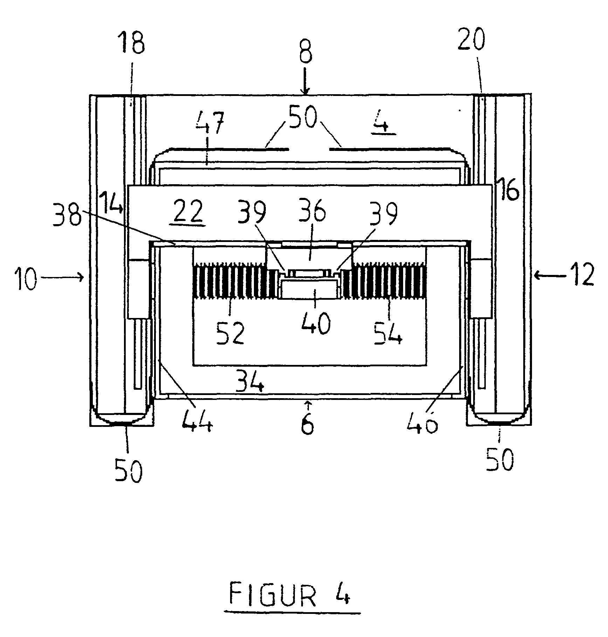

Der untere Querträger 30 durchquert den Arbeitsbehälter 32 an zwei Seitenwänden 44 und 46 und verfährt entlang seiner Bewegungsrichtung in je einer fensterförmigen Durchführung 48 in den beiden Seitenwänden 44 und 46 des Arbeitsbehälters 32. Bei den Schneiderosionsmaschinen, bei denen der funkenerosive Prozeß in einem Flüssigkeitsbad erfolgen soll, sind somit geeignete Dichtungsmaßnahmen bei dem Durchgang des unteren Querträgers 30 durch die Durchführungen 48 zu treffen. Diese können beispielsweise, wie in der Figur 4 angedeutet, in Form je eines Blechstreifens 50 pro Seitenwand 44 und 46 vorliegen, der in speziellen Führungen der Seitenwände 14 und 15 des Maschinengestells 2 und der Rückwand 47 des Arbeitsbehälters 32 geführt wird. Der untere Querträger 30 ist flüssigkeitsdicht mit den Blechstreifen 50 gekoppelt, während die Blechstreifen 50 wiederum gegenüber den beiden Seitenwänden 44 und 46 des Arbeitsbehälters 32 verschieblich geführt ist und über geeignete Dichtmittel den Innenraum des Arbeitsbehälters 32 gegenüber dem Außenraum an den fensterförmigen Durchführungen 48 abdichtet.

Der untere Schlitten 42 verfährt entlang des unteren Querträgers 30. Hierfür ist der untere Querträger 30 beispielsweise als geschlossenes im wesentlichen rechteckiges Profil ausgebildet, wodurch eine hohe Torsions- und Biegefestigkeit gewährleistet ist. Die Führungen des unteren Schlittens 42 sind vorzugsweise auf der vorderen Außenseite des unteren Querträgers 30 angeordnet. Ein Kugelgewindetrieb zum Antreiben des unteren Schlittens 42, der untere Schlitten 42 selbst und der untere Drahtführungskopf 43 sind dann ebenfalls vorzugsweise auf der vorderen Außenseite des unteren Querträgers 30 angeordnet. Sie stehen damit in einer günstigen Position für Montage- und Unterhaltsarbeiten. Alternativ kann der untere Querträger 30 im wesentlichen U-förmig ausgebildet sein, wodurch die Führungen, die Spindel des Kugelgewindetriebes und die Drahttransporteinrichtung zumindest teilweise in das Profil integriert werden können. Dieser Vorteil geht jedoch insbesondere zu Lasten der Torsionsfestigkeit. Da der Querträger 30 durch die Arbeitsflüssigkeit bewegt wird, muß in diesem speziellen Beispiel der Innenraum des Querträgers 30 gegenüber dem Arbeitsbehälter 32 über geeignete Dichtungsmaßnahmen abgedichtet sein. In dem gezeigten Ausführungsbeispiel ist je ein Faltenbalg 52 und 54 an beiden Seiten des unteren Schlittens 42 - in Längsrichtung des unteren Querträgers 30 verlaufend - vorgesehen, der mit seinem einen Ende flüssigkeitsdicht mit dem Schlitten 42 und mit seinem anderen Ende beispielsweise flüssigkeitsdicht mit dem Blech 50 verbunden ist. Selbstverständlich sind auch weitere Abdichtungsvarianten möglich.

Wird der obere Querträger 22, eventuell auch der obere Schlitten 36 in die äußerste Position, z.B. nach hinten und nach links verfahren, so bleibt der Arbeitsraum nach oben weitgehend frei. Größere Werkstücke können nun ohne jegliche Schwierigkeit, z.B. mit einem Kran geladen und entladen werden. Die Vorderseite 6 wird üblicherweise soweit möglich "unverbaut" gelassen, so daß nach dem öffnen des Arbeitsbehälters 32 bzw. der Behältertüre freie Sicht auf den Arbeitsraum besteht und manuelle Eingriffe unbehindert möglich sind. Seitlich ist durch die beiden Seitenwände 14 und 16 prinzipiell kein Zugang zum Arbeitsraum möglich. Die Rückseite kann jedoch - wie bereits erwähnt - im Hinblick auf allfällige Automatisierungsmittel, wie Roboter, etwaige Palettenwechselsysteme, Meß- und Überwachungsgeräte oder sonstige Mittel, zumindest teilweise offen gestaltet werden.

Vorteilhaft werden mit dem vorliegenden Maschinenkonzept ab einer gewissen Verfahrweglänge die Außenabmessungen der Schneiderodiermaschine gegenüber vergleichbaren Schneiderodiermaschinen mit konventioneller Bauform bedeutend reduziert, so daß nebst dem geringeren Platzbedarf am Aufstellort auch weniger Aufwand beim Transport der Anlage entsteht. Zu den weiteren Vorteilen der bevorzugten Bauform zählt, daß die Drahtführungsköpfe 41 und 43 stark versetzt werden können, und somit auch bei großer Werkstückhöhe beachtliche Drahtneigungen eingestellt werden können. In diesem Fall kann man die Drahtführungsköpfe 41 und 43 in bekannter Weise orientierbar gestalten, damit die Drahtelektrode nicht übermäßig beansprucht wird. Weiterhin können durch dieses sogenannte Doppelgantry-Prinzip gewisse Bauteile, insbesondere Motoren, Führungen, Kugelumlaufspindeln, usw. gleich mehrfach auf der Werkzeugmaschine verwendet werden, da die Beanspruchung und der Verfahrweg der beiden Achsensysteme X/Y und U/V ähnlich ist. Dadurch ergeben sich vorteilhaft Einsparungen beim Einkauf, Service, Lagerverwaltung, usw.. Auch maschinenspezifische Teile, wie die Querträger 22 und 30 sowie Schlitten 36 und 42, können unter Umständen gleich sein.

Schließlich eignet sich dieser Aufbau insbesondere zur Bearbeitung mittelgroßer bis sehr großer Werkstücke, ist jedoch nicht hierauf beschränkt. Weiterhin werden insbesondere die Genauigkeit und die Herstellungskosten optimiert, eine hohe Steifigkeit und ein gutes thermisches Verhalten erzielt und die Bedienerfreundlichkeit erleichtert (Zugang zum Arbeitsraum, insbesondere zum Beladen und Entladen).

Weiterhin vorteilhaft können das Maschinengestell 2 und die beiden Portalträger praktisch unverändert zum Bau einer Senkerodiermaschine, einer Fräsmaschine oder anderer Werkzeugmaschinen verwendet werden. Selbstverständlich sind dann die typischen Merkmale der in den Figuren 1 bis 4 gezeigten Schneiderodiermaschine abzuändern bzw. zu entfernen. Daher sind nach einem weiteren Gedanken der Erfindung die Grundelemente des hier beschriebenen Maschinenkonzeptes nicht nur für Schneiderodiermaschinen, sondern auch für andere Typen von Werkzeugmaschinen verwendbar, bei welchem die Bearbeitung durch eine Relativbewegung des Werkzeuges an einer Führungsposition in eine X/Y-Richtung und an einer weiteren Führungsposition in eine U/V-Richtung oder aber auch durch eine Bewegung des Bearbeitungswerkzeuges in eine X/Y-Richutng und durch eine unabhängige Bewegung des Werkstücks in eine U/V-Richtung erfolgt (z.B. Fräsmaschine, Bohrmaschine, Schleifmaschinen oder ähnliche). Hierzu stellt die Erfindung einen Modulsatz für den Zusammenbau von Werkzeugmaschinen, insbesondere von Funkenerosionsmaschinen, mit mehreren folgender Module zur Verfügung: ein zentrales Maschinengestell 2; ein am Maschinengestell 2 vorsehbares erstes Werkzeugführungsmittel zum Führen eines Werkzeuges, wobei das erste Werkzeugführungsmittel als verfahrbarer Portalträger mit verfahrbarem Schlitten ausgebildet ist, so daß das Werkzeugführungsmittel bezüglich des Maschinengestells 2 in einer ersten Ebene entlang einer ersten Richtung und einer orthogonal zur ersten Richtung verlaufenden zweiten Richtung verfahrbar ist, und ggf. ein am Maschinengestell 2 vorsehbares zweites Werkzeug- oder Werkstückhaltemittel zum Halten des Werkzeuges oder eines Werkstückes, wobei das zweite Werkzeug- oder Werkstückhaltemittel als verfahrbarer Portalträger mit verfahrbarem Schlitten ausgebildet ist, so daß das Werkzeug- oder Werkstückhaltemittel bezüglich des Maschinengestells 2 in einer zweiten Ebene entlang einer dritten Richtung und einer orthogonal zur dritten Richtung verlaufenden vierten Richtung verfahrbar ist. Diese Module sind derart ausgelegt, daß sie für den Zusammenbau verschiedenartiger Werkzeugmaschinen, z.B. Senkerosionsmaschine, Schneiderosionsmaschine, Fräsmaschine oder ähnliche, verwendet werden können. Diese Grundmodule bilden die Bausteine eines Baukastens, mit welchem verschiedenartige Werkzeugmaschinen zusammengebaut werden können. Die einfachste Variante der Erfindung besteht darin, lediglich die Grundelemente zu verwenden, um z.B. eine Fräs- oder Senkerosionsmaschine zu bauen (bei ruhendem Werkstück und lediglich einem oberen in X/Y-Richtung und in Z-Richtung bewegbaren Werkzeugführungskopf). Wird zu dieser Variante der untere U/V-Führungskopf hinzugefügt, so erhält man bereits eine Schneiderosionsmaschine. Es können also die gleichen substantiellen Maschinenmodule für unterschiedliche Maschinenvarianten eingesetzt werden, mit dem Vorteil einer preiswerteren Herstellung von Werkzeugmaschinen.

Hervorzuheben dabei ist, daß die Grundelemente dieser Schneiderosionsmaschine, wie Maschinengestell 2, oberer Portalträger 22 mit oberem Schlitten 36 und Arbeitsbehälter 32 (bis auf die fehlenden Durchführungen 48 in den Seitenwänden 44 und 46 für den unteren Drahtführungsarm) und die Pinole 40 denjenigen einer Senkerosionsmaschinen entsprechen. Mit anderen Worten sind diese Module des erfindungsgemäßen Maschinenkonzepts nach Art eines Baukastens sowohl für eine Schneid- als auch für eine Senkerosionsmaschine, aber auch für andere Werkzeugmaschinen, etwa eine Fräsmaschine oder ähnliche, verwendbar, mit dem Vorteil, daß höhere Stückzahlen erreicht werden und die Fertigungskosten gesenkt werden können.

## Patentansprüche

1. Werkzeugmaschine, mit
a) einem Maschinengestell (2),
b) einem am Maschinengestell (2) vorgesehenen ersten Werkzeugführungsmittel (22,36,40) zum Führen eines Werkzeuges an einer ersten Führungsposition (41), wobei das erste Werkzeugführungsmittel als verfahrbarer Portalträger (22) mit einem verfahrbare ersten Schlitten (36) ausgebildet ist, so daß das erste Werkzeugführungsmittel (22,36,40) bezüglich des Maschinengestells (2) in einer ersten Ebene entlang einer ersten Richtung und einer orthogonal zur ersten Richtung verlaufenden zweiten Richtung verfahrbar ist,
c) einem am Maschinengestell (2) vorgesehenen zweiten Werkzeugführungsmittel (30,42) zum Führen des Werkzeuges an einer zweiten Führungsposition (43), wobei das zweite Werkzeugführungsmittel (30,42) als verfahrbarer Portalträger (30) mit einem verfahrbaren zweiten Schlitten (42) ausgebildet ist, so daß das zweite Werkzeugführungsmittel (30,42) bezüglich des Maschinengestells (2) in einer zweiten Ebene entlang einer dritten Richtung und einer orthogonal zur dritten Richtung verlaufenden vierten Richtung sowie unabhängig vom ersten Werkzeugführungsmittel (22,36,40) verfahrbar ist, und
d) einem am Maschinengestell (2) vorgesehenen Werkstückhaltemittel (34) zum Halten des Werkstückes, welches derart ausgestaltet ist, daß das Werkstück zwischen der ersten (41) und der zweiten Führungsposition (43) des Werkzeuges geführt wird,
**gekennzeichnet durch**
e) einen Arbeitsbehälter (32) für die Aufnahme des Werkstücks und einer Bearbeitungsflüssigkeit während der Bearbeitung, wobei der Arbeitsbehälter (32) derart auf dem Maschinengestell (2) angeordnet ist, daß der zweite Portalträger (30) zwei gegenüberliegende Seitenwände (44, 46) des Arbeitsbehälters (32) durchquert.

2. Werkzeugmaschine nach Anspruch 1, bei welcher das Werkstückhaltemittel (34) gegenüber dem Maschinengestell (2) festgelegt ist.

3. Werkzeugmaschine nach Anspruch 1, bei welcher das erste (22,36,40) und/oder das zweite Werkzeugführungsmittel (30,42) in seinem Abstand zu dem Werkstück verstellbar ist.

4. Werkzeugmaschine nach einem der vorhergehenden Ansprüche, bei welcher die beiden Portalträger (22;30) übereinander angeordnet sind und das Werkstückhaltemittel (34) derart ausgebildet und angeordnet ist, daß das Werkstück bei der Bearbeitung zwischen den beiden Portalträgern (22;30) angeordnet ist.

5. Werkzeugmaschine nach einem der vorhergehenden Ansprüche, bei welcher die beiden Portalträger (22;30) derart auf dem Maschinengestell (2) angeordnet sind, daß sie in gleicher Richtung verfahrbar sind.

6. Werkzeugmaschine nach einem der vorhergehenden Ansprüche, bei welcher an zwei gegenüberliegenden Seiten (10,12) des Maschinengestelles (2) je eine Seitenwand (14;16) angeordnet ist, welche auf ihrem oberen Rand eine Führung (18;20) für den ersten Portalträger (22) aufweist.

7. Werkzeugmaschine nach Anspruch 6, bei welcher in den Seitenwänden (14;16) Öffnungen (24) mit Führungen (28) für den zweite Portalträger (30) eingelassen sind.

8. Werkzeugmaschine nach Anspruch 7, bei welcher die Führungen (28) für den zweiten Portalträger (30) am unteren Rand der Öffnungen (24), direkt auf dem Maschinengestell (2) angeordnet sind.

9. Werkzeugmaschine nach Anspruch 7, bei welcher die Führungen (28) für den zweiten Portalträger (30) am oberen Rand der Öffnung (24) hängend angeordnet sind.

10. Werkzeugmaschine nach Anspruch 6, bei welcher die Seitenwände (14;16) an ihren Innenseiten lateral angebrachte Führungen für den zweiten Portalträger (30) aufweisen.

11. Werkzeugmaschine nach einem der Ansprüche 1 bis 5, bei welcher an zwei gegenüberliegenden Seiten (10;12) des Maschinengestelles (2) je ein auf zwei Säulen abgestützter Querbalken angeordnet ist, welcher in seiner Längsrichtung eine Führung (18) für den ersten Portalträger (22) aufweist.

12. Werkzeugmaschine nach Anspruch 11, bei welcher an zwei gegenüberliegenden Seiten (10;12) des Maschinengestelles (2) je ein auf zwei weiteren Säulen abgestützter zweiter Querbalken angeordnet ist, welcher in seiner Längsrichtung eine weitere Führung für den ersten Portalträger (22) aufweist.

13. Werkzeugmaschine nach Anspruch 12, bei welcher der zweite Querbalken zwischen den Säulen des ersten Querbalkens und unterhalb des ersten Querbalkens angeordnet ist und die beiden Längsrichtungen des ersten (14;16) und des zweiten Querbalkens gleich sind.

14. Werkzeugmaschine nach einem der vorhergehenden Ansprüche, deren Vorderseite (6) im wesentlichen offen ausgestaltet ist.

15. Werkzeugmaschine nach einem der vorhergehenden Ansprüche, deren Rückseite (8) wenigsten teilweise offen ausgestaltet ist.

16. Werkzeugmaschine nach einem der vorhergehenden Ansprüche, bei welcher die beiden Portalträger (22,30) derart auf dem Maschinengestell (2) angeordnet sind, daß die erste Ebene parallel zur zweiten Ebene verläuft.

17. Werkzeugmaschine nach Anspruch 16, bei welcher die erste und dritte Richtung sowie die zweite und vierte Richtung zusammenfallen und ein erster (22) und ein zweiter Querträger (30) des ersten bzw. des zweiten Portalträgers entlang der ersten Richtung und der erste (36) und der zweite Schlitten (42) des ersten bzw. des zweiten Portalträgers entlang der zweiten Richtung verfahrbar sind.

18. Werkzeugmaschine nach Anspruch 17, bei welcher der erste (22) und/oder der zweite Querträger (30) über Portalsäulen auf der Führung (18,20;28) verfahrbar ist.

19. Werkzeugmaschine nach Anspruch 17, bei welcher die Enden des ersten (22) und/oder des zweiten Querträgers (30) direkt auf der Führung (18,20;28) verfahrbar sind.

20. Werkzeugmaschine nach einem der vorhergehenden Ansprüche, welche als Schneiderodiermaschine ausgestaltet ist, bei welcher das Werkzeug eine Drahtelektrode ist sowie das obere (22,38,40) und das untere Werkzeugführungsmittel (30,42) einen oberen (41) und einen unteren Drahtführungskopf (43) umfassen.

21. Werkzeugmaschinen nach Anspruch 20, bei welcher der obere Drahtführungskopf (41) zusätzlich in einer zu der ersten Ebene senkrechten Richtung verfahrbar ist.

22. Werkzeugmaschine nach einem der Anspruch 4 bis 21, bei welcher das Maschinengestell (2) ferner eine Rückwand aufweist, welche die beiden Seitenwände (14,16) bzw. Säulen (26) miteinander verbindet, und welche eine Höhe aufweist, die etwa der Höhe des Arbeitsbehälters (32) entspricht.

23. Werkzeugmaschine nach Anspruch 22, bei welcher die Rückwand eine Seitenwand (47) des Arbeitsbehälters (32) bildet.

24. Werkzeugmaschine nach einem der Ansprüche 4 bis 21, bei welcher an der Rückseite (8) und/oder Vorderseite (6) des Maschinengestells (2) ferner eine Brücke angeordnet ist, welche die beiden Seitenwände (14,16) bzw. Querbalken bzw. Säulen (26) miteinander verbindet.

25. Werkzeugmaschine nach einem der Ansprüche 20 bis 24, bei welcher der zweite Querträger (30) des zweiten Portalträgers als im wesentlichen U-förmiges Profil ausgebildet ist und der an dem Querträger (30) beweglich geführte Schlitten (42) von einem zumindest teilweise innerhalb des zweiten Querträgers (30) angeordneten Antriebsmittel angetrieben wird.

26. Werkzeugmaschine nach einem der Ansprüche 20 bis 24, bei welcher der zweite Querträger (30) des zweiten Portalträgers als im wesentlichen geschlossenes Hohlprofil ausgebildet ist und der an dem Querträger (30) beweglich geführte Schlitten (42) von einem seitlich außen am zweiten Querträger (30) angeordneten Antriebsmittel angetrieben wird.

27. Werkzeugmaschine nach Anspruch 25, bei welcher der zweite Querträger (30) des zweiten Portalträgers ein Dichtungsmittel (52,54) aufweist, welches derart ausgestaltet ist, daß es unabhängig von der Position des Schlittens (42) bezüglich des zweiten Querträgers (30) den Außen- und den Innenraum des zweiten Querträgers (30) voneinander abdichtet.

28. Werkzeugmaschine nach einem der Ansprüche 20 bis 24, bei welcher die Seitenwände (44,46) des Arbeitsbehälters (32) ferner ein Dichtungsmittel (50) aufweisen, welches derart ausgestaltet ist, daß es unabhängig von der Position des zweiten Portalträgers den Außen- und den Innenraum des Arbeitsbehälters (32) abdichtet.

29. Werkzeugmaschine nach einem der vorhergehenden Ansprüche, bei welcher der Arbeitsbehälter (32) an der Vorder- (6) und/oder Rückseite (8) des Maschinengestelles (2) eine, insbesondere automatisch betätigbare Türe aufweist.

30. Werkzeugmaschine nach einem der vorhergehenden Ansprüche, bei welcher der Arbeitsbehälter (32) begehbar ausgestaltet ist.

31. Werkzeugmaschine nach einem der vorhergehenden Ansprüche, bei welcher im Maschinengestell (2) unterhalb des Arbeitsbehälters (32) ein weiterer Behälter für die Aufnahme der Bearbeitungsflüssigkeit bei Entleeren des Arbeitsbehälters (32) vorgesehen ist.

32. Werkzeugmaschine nach einem der Ansprüche 6 bis 31, bei welcher das Werkstückhaltemittel (34) einen Aufspannrahmen (34) zum Aufspannen des Werkstückes umfaßt, welcher an den Seitenwänden (14,16) bzw. den Säulen (26) befestigt ist.

33. Werkzeugmaschine nach einem der vorhergehenden Ansprüche, bei welcher das Maschinengestell (2) aus einem Polymerbeton gefertigt ist.

34. Werkzeugmaschine nach einem der Ansprüche 6 bis 33, bei welcher die beiden Seitenwände (14,16), die beiden Querbalken samt Säulen, der Aufspannrahmen (34) und/oder die beiden Querträger (22,30) aus einem Polymerbeton gefertigt sind.

35. Werkzeugmaschine nach einem der vorhergehenden Ansprüche, bei welcher der Antrieb für die Bewegung der beiden Querträger (22,30) und/oder der beiden Schlitten (36,42) der Portalträger als überlagerter Makro- und Mikrobewegungsantrieb ausgebildet ist.

36. Werkzeugmaschine nach einem der vorhergehenden Ansprüche, bei welcher die Antriebe als Kugelgewindespindel-Antriebe ausgebildet sind.

37. Werkzeugmaschine nach einem der Ansprüche 1 bis 35, bei welcher die Antriebe als Direktantriebe ausgebildet sind.

## Claims

1. A machine tool comprising:
a machine frame (2);
a first tool guide means (22, 36, 40) on the machine frame (2) to guide a tool at a first guide position (41), wherein the first tool guide means (22, 36, 40) is formed as a movable gantry carrier (22) with a movable first sliding carriage (36), such that the first tool guide means (22, 36, 40) can travel with respect to the machine frame (2) in a first plane along a first direction and along a second direction which is orthogonal to the first direction,
a second tool guide means (30, 42) on the machine frame (2) to guide the tool at a second guide position (43), wherein the second tool guide means (30, 42) is formed as a movable gantry carrier (30) with a movable second sliding carriage (42), such that the second tool guide means (30, 42) can travel independently of the first tool guide means (22, 36, 40) with respect to the machine frame (2) in a second plane along a third direction and along a fourth direction which is orthogonal to the third direction; and
a part holder means (34) on the machine frame (2) to hold the machined part which is arranged to guide the machined part between the first (41) and the second guide position (43) of the machine tool,
**characterised by** a work container (32) for receiving of the machined part and a work fluid during machining, wherein the work container (32) is arranged on the machine frame (2) such that the second gantry carrier (30) traverses two opposite lateral walls (44, 46) of the work container (32).

2. A machine tool as defined in claim 1, wherein the part holder means (34) is located in a fixed position relative to the machine frame (2).

3. A machine tool as defined in claim 1, wherein the distance of the first (22, 36, 40) and/or second tool guide means (30, 42) can be adjusted relative to the machined part.

4. A machine tool as defined in any one of the preceding claims, wherein the two gantry carriers (22; 30) are located above each other, and the part holder means (34) is arranged and located such that the machined part is located between the two gantry carriers (22; 30) during machining.

5. A machine tool as defined in any one of the preceding claims, wherein the two gantry carriers (22; 30) are mounted to the machine frame (2) such that they can be moved in the same direction.

6. A machine tool as defined in any one of the preceding claims, wherein the machine frame (2) has two sides (10, 12), a lateral wall (14; 16) is located on each of the two sides (10, 12) of the machine frame (2), and a guide (18; 20) for the first gantry carrier (22) is located on an upper border of each of the lateral walls (14; 16).

7. A machine tool as defined in claim 6, wherein an opening (24) is defined in each of the lateral walls (14; 16), and a guide (28) for the second gantry carrier (30) is located in each of the openings (24).

8. A machine tool as defined in claim 7, wherein each of the guides (28) for the second gantry carrier (30) is located directly on the machine frame (2) at a lower border of a respective one of the openings (24).

9. A machine tool as defined in claim 7, wherein each of the guides (28) for the second gantry carrier (30) is suspended at an upper border of a respective one of the openings (24).

10. A machine tool as defined in claim 6, wherein a guide for the second gantry carrier (30) is mounted adjacent an internal side of each of the lateral walls (14; 16).

11. A machine tool as defined in any one of claims 1 to 5, wherein the machine frame (2) includes two opposite sides (10; 12), each of the sides (10; 12) includes two columns and a first cross beam resting on the two columns, and each of the first cross beams presents a guide (18) for the first gantry carrier (22) along its longitudinal direction.

12. A machine tool as defined in claim 11, wherein the machine frame (2) includes two opposite sides (10; 12), each of the sides (10; 12) includes two further columns and a second cross beam resting on the two columns, each of the second cross beams presents a further guide for the first gantry carrier (22) along its longitudinal direction.

13. A machine tool as defined in claim 12, wherein the second cross beam is located between the columns of the first cross beam and below the first cross beam, and the two longitudinal directions of the first (14; 16) and second cross beam are identical.

14. A machine tool as defined in any one of the preceding claims, the front side of which is substantially open.

15. A machine tool as defined in any one of the preceding claims, the back side of which is at least partially open.

16. A machine tool as defined in any one of the preceding claims, wherein two gantry carriers (22; 30) are located on the machine frame (2) such that the first plane is parallel to the second plane.

17. A machine tool as defined in claim 16, wherein the first and third directions are substantially the same, the second and fourth directions are substantially the same, and a first (22) and a second crossbar (30) of the first and second gantry carriers, respectively, can be moved along the first direction, and the first (36) and second sliding carriages (42) of the first and second gantry carriers, respectively, can be moved along the second direction.

18. A machine tool as defined in claim 17, wherein the first (22) and/or the second crossbar (30) can be moved over gantry columns on the guide (18, 20; 28).

19. A machine tool as defined in claim 17, wherein the ends of the first (22) and/or the second crossbar (30) can be moved directly on the guides (18, 20; 28).

20. A machine tool as defined in any one of the preceding claims, which is designed as a cutting erosion machine, wherein the tool is a wire electrode, and the upper tool guide (22, 38, 40) comprises an upper wire guide head (41), and the lower tool guide comprises a lower wire guide head (43).

21. A machine tool as defined in claim 20, wherein the upper wire guide head (41) can be further moved in a vertical direction perpendicular to the first plane.

22. A machine tool as defined in any one of the preceding claims 4 to 21, wherein the machine frame (2) further includes a back wall connecting the two lateral walls (14; 16) and columns (26), respectively, and wherein the back wall has a height which corresponds approximately to the height of the work container (32).

23. A machine tool as defined in claim 22, wherein the back wall forms a lateral wall (47) of the work container (32).

24. A machine tool as defined in any one of the preceding claims 4 to 21, wherein a bridge is further arranged on the back (8) and/or the front (6) of the machine frame (2), and wherein the bridge connects the two lateral walls (14, 16) and cross beams and columns (26), respectively, with each other.

25. A machine tool as defined in any one of the preceding claims 20 to 24, wherein the second crossbar (30) of the second gantry carrier has a substantially U-shaped profile, the sliding carriage (42) is movably mounted on the crossbar (30), and the sliding carriage (42) is driven by a driving means which is arranged at least in part inside the second crossbar (30).

26. A machine tool as defined in any one of the preceding claims 20 to 24, wherein the second crossbar (30) of the second gantry carrier has a closed hollow profile, the sliding carriage is movably mounted on the crossbar (30), the sliding carriage is driven by a driving means located laterally on an outside of the second crossbar (30).

27. A machine tool as defined in claim 25, wherein the second crossbar (30) of the second gantry carrier includes a sealing means (52, 54) which is designed such that it seals the external space and the internal space of the second crossbar (30) from each other regardless of the position of the sliding carriage (42) with respect to the second crossbar (30).

28. A machine tool as defined in any one of the preceding claims 20 to 24, wherein the lateral walls (44, 46) of the work container (32) further include a sealing means (50) which is designed such that it seals the external space and the internal space of the work container (32) from each other regardless of the position of the second gantry carrier.

29. A machine tool as defined in any one of the preceding claims, wherein the work container (32) includes a door at the front (6) and/or the back side (8) of the machine frame (2) which is in particular an automatically actuated door.

30. A machine tool as defined in any one of the preceding claims, wherein the work container (32) is structured to be walked on.

31. A machine tool as defined in any one of the preceding claims, wherein a further container is provided in the machine frame (2) below the work container (32) for receiving the work fluid during draining of the work container (32).

32. A machine tool as defined in any one of the preceding claims 6 to 31, wherein the work holder means (34) comprises a clamp frame (34) for clamping the machined part, the clamp frame being attached to the lateral walls (14, 16) and the columns (26), respectively.

33. A machine tool as defined in any one of the preceding claims, wherein the machine frame (2) is made of a polymer concrete.

34. A machine tool as defined in any one of the preceding claims 6 to 33, wherein the two lateral walls (14, 16), the two cross beams, the columns, the clamp frame (34) and/or the two crossbars (22, 30) are made of a polymer concrete.

35. A machine tool as defined in any one of the preceding claims, wherein the drive for moving of the two crossbars (22, 30) and/or the two sliding carriages (36, 42) of the gantry carrier is constructed as a superimposed macro and micro movement drive.

36. A machine tool as defined in any one of the preceding claims, wherein the drives are constructed as spherical threaded spindle drives.

37. A machine tool as defined in any one of the preceding claims 1 to 35, wherein the drives are constructed as direct drives.

## Revendications

1. Machine-outil, comprenant
a) un bâti de machine (2)
b) un premier moyen de guidage d'outil (22, 36, 40) prévu sur le bâti de machine (2) pour le guidage d'un outil sur une première position de guidage (41), le premier moyen de guidage d'outil étant conçu comme un support de portique (22) déplaçable avec un premier coulisseau (36) déplaçable, de sorte que le premier moyen de guidage d'outil (22, 36, 40) peut être déplacé par rapport au bâti de machine (2) dans une première position le long d'une première direction et d'une seconde direction perpendiculaire à la première direction,
c) un second moyen de guidage d'outil (30, 42) prévu sur le bâti de machine (2) pour le guidage de l'outil sur une seconde position de guidage (43), le second moyen de guidage d'outil (30, 42) étant conçu comme un support de portique (30) déplaçable avec un second coulisseau (42) déplaçable, de sorte que le second moyen de guidage d'outil (30, 42) peut être déplacé par rapport au bâti de machine (2) dans un second plan le long d'une troisième direction et d'une quatrième direction perpendiculaire à la troisième direction et indépendamment du premier moyen de guidage d'outil (22, 36, 40), et
d) un moyen de retenue d'outil (34) prévu sur le bâti de machine (2) pour la retenue de l'outil, qui est conçu de telle sorte que la pièce est guidée entre la première position de guidage (41) et la seconde position de guidage (43) de l'outil,
**caractérisée par**
e) un récipient de travail (32) pour le logement de l'outil et d'un liquide d'usinage pendant l'usinage, le récipient de travail (32) étant disposé sur le bâti de machine (2) de telle sorte que le second support de portique (30) traverse deux parois latérales (44, 46) opposées du récipient de travail (32).

2. Machine-outil selon la revendication 1, sur laquelle le moyen de retenue d'outil (34) est fixé en face du bâti de machine (2).

3. Machine-outil selon la revendication 1, sur laquelle le premier moyen de guidage d'outil (22, 36, 40) et/ou le second moyen de guidage d'outil (30, 42) peut/peuvent être déplacé(s) dans sa distance par rapport à la pièce.

4. Machine-outil selon l'une quelconque des revendications précédentes, sur laquelle les deux supports de portique (22 ; 30) sont disposés l'un au-dessus de l'autre et le moyen de retenue d'outil (34) est conçu et disposé de telle sorte que la pièce est disposée lors de l'usinage entre les deux supports de portique (22 ; 30).

5. Machine-outil selon l'une quelconque des revendications précédentes, sur laquelle les deux supports de portique (22 ; 30) sont disposés sur le bâti de machine (2) de telle sorte qu'ils peuvent être déplacés dans la même direction.

6. Machine-outil selon l'une quelconque des revendications précédentes, sur laquelle une paroi latérale (14 ; 16) est disposée sur chacun des deux côtés (10, 12) opposés du bâti de machine (2), laquelle paroi présente sur son bord supérieur un guide (18 ; 20) pour le premier support de portique (22).

7. Machine-outil selon la revendication 6, sur laquelle des ouvertures (24) avec des guides (28) pour le second support de portique (30) sont emboîtées dans les parois latérales (14 ;16).

8. Machine-outil selon la revendication 7, sur laquelle les guides (28) pour le second support de portique (30) sont disposés sur le bord inférieur des ouvertures (24), directement sur le bâti de machine (2).

9. Machine-outil selon la revendication 7, sur laquelle les guides (28) pour le second support de portique (30) sont disposés en suspension sur le bord supérieur de l'ouverture (24).

10. Machine-outil selon la revendication 6, sur laquelle les parois latérales (14 ; 16) présentent sur leurs côtés intérieurs des guides placés latéralement pour le second support de portique (30).

11. Machine-outil selon l'une quelconque des revendications 1 à 5, sur laquelle sur chacun des deux côtés (10 ; 12) opposés du bâti de machine (2) est disposée une barre transversale soutenue sur deux colonnes, qui présente dans sa direction longitudinale un guide (18) pour le premier support de portique (22).

12. Machine-outil selon la revendication 11, sur laquelle sur chacun des deux côtés (10 ; 12) opposés du bâti de machine (2) est disposée une seconde barre transversale soutenue sur deux autres colonnes, qui présente dans sa direction longitudinale un autre guide pour le second support de portique (22).

13. Machine-outil selon la revendication 12, sur laquelle la seconde barre transversale est disposée entre les colonnes de la première barre transversale et au-dessous de la seconde barre transversale et les deux directions longitudinales de la première barre transversale (14 ; 16) et de la seconde barre transversale sont identiques.

14. Machine-outil selon l'une quelconque des revendications précédentes, dont le côté avant (6) est conçu sensiblement ouvert.

15. Machine-outil selon l'une quelconque des revendications précédentes, dont le côté arrière (8) est conçu au moins partiellement ouvert.

16. Machine-outil selon l'une quelconque des revendications précédentes, sur laquelle les deux supports de portique (22, 30) sont disposés sur le bâti de machine (2) de telle sorte que le premier plan est parallèle au second plan.

17. Machine-outil selon la revendication 16, sur laquelle la première et la troisième directions ainsi que la seconde et la quatrième directions coïncident et une première traverse (22) et une seconde traverse (30) du premier et du second supports de portique peuvent être déplacés le long de la première direction et le premier coulisseau (36) et le second coulisseau (42) du premier et du second supports de portique peuvent être déplacés le long de la seconde direction.

18. Machine-outil selon la revendication 17, sur laquelle la première (22) et/ou la seconde traverses (30) peut/peuvent être déplacée(s) au moyen de colonnes de portique sur le guide (18, 20 ; 28).

19. Machine-outil selon la revendication 17, sur laquelle les extrémités de la première traverse (22) et/ou de la seconde traverse (30) peuvent être déplacées directement sur le guide (18, 20 ; 28).

20. Machine-outil selon l'une quelconque des revendications précédentes, qui est conçue comme une érodeuse à découper, sur laquelle l'outil est un fil d'électrode et le moyen de guidage d'outil supérieur (20, 38, 40) et le moyen de guidage d'outil inférieur (30, 42) comprennent une tête de guidage de fil (41) supérieure et une tête de guidage de fil (43) inférieure.

21. Machine-outil selon la revendication 20, sur laquelle la tête de guidage de fil (41) supérieure peut être déplacée en supplément dans une direction perpendiculaire au premier plan.

22. Machine-outil selon l'une quelconque des revendications 4 à 21, sur laquelle le bâti de machine (2) présente une paroi arrière, qui relie les deux parois latérales (14, 16) ou colonnes (26) entre elles, et qui présente une hauteur correspondant à peu près à la hauteur du récipient de travail (32).

23. Machine-outil selon la revendication 22, sur laquelle la paroi arrière forme une paroi latérale (47) du récipient de travail (32).

24. Machine-outil selon l'une quelconque des revendications 4 à 21, sur laquelle sur le côté arrière (8) et/ou le côté avant (6) du bâti de machine (2) est disposé également un pont qui relie entre elles les deux parois latérales (14, 16) ou barres transversales ou colonnes (26).

25. Machine-outil selon l'une quelconque des revendications 20 à 24, sur laquelle la seconde traverse (30) du second support de portique est conçue comme un profilé sensiblement en U et le coulisseau (42) guidé de façon mobile sur la traverse (30) est entraîné par un moyen d'entraînement disposé au moins partiellement à l'intérieur de la seconde traverse (30).

26. Machine-outil selon l'une quelconque des revendications 20 à 24, sur laquelle la seconde traverse (30) du second support de portique est conçue comme un profilé creux sensiblement fermé et le coulisseau (42) guidé de façon mobile sur la traverse (30) est entraîné par un moyen d'entraînement disposé au moins à l'extérieur sur la seconde traverse (30).

27. Machine-outil selon la revendication 25, sur laquelle la seconde traverse (30) du second support de portique présente un moyen d'étanchéité (52, 54), qui est conçu de telle sorte qu'il assure l'étanchéité de l'espace extérieur et de l'espace intérieur de la seconde traverse l'un par rapport à l'autre indépendamment de la position du coulisseau (42) par rapport à la seconde traverse (30).

28. Machine-outil selon l'une quelconque des revendications 20 à 24, sur laquelle les parois latérales (44, 46) du récipient de travail (32) présentent également un moyen d'étanchéité (50), qui est conçu de telle sorte qu'il assure l'étanchéité de l'espace extérieur et de l'espace intérieur du récipient de travail (32) indépendamment de la position du second support de portique.

29. Machine-outil selon l'une quelconque des revendications précédentes, sur laquelle le récipient de travail (32) présente une porte pouvant être actionnée en particulier automatiquement sur le côté avant (6) et/ou le côté arrière (8) du bâti de machine (2).

30. Machine-outil selon l'une quelconque des revendications précédentes, sur laquelle le récipient de travail (32) est conçu de façon praticable.

31. Machine-outil selon l'une quelconque des revendications précédentes, sur laquelle, dans le bâti de machine (2) et au-dessous du récipient de travail (32), il est prévu un autre récipient pour le logement du liquide d'usinage en cas de vidage du récipient de travail (32).

32. Machine-outil selon l'une quelconque des revendications 6 à 31, sur laquelle le moyen de retenue de pièce (34) comprend un cadre de montage (34) pour le montage de l'outil, qui est fixé sur les parois latérales (14, 16) ou les colonnes (26).

33. Machine-outil selon l'une quelconque des revendications précédentes, sur laquelle le bâti de machine (2) est fabriqué à base d'un béton polymère.

34. Machine-outil selon l'une quelconque des revendications 6 à 33, sur laquelle les deux parois latérales (14, 16), les deux barres transversales avec les colonnes, le cadre de montage (34) et/ou les deux traverses (22, 30) sont fabriqués à base d'un béton polymère.

35. Machine-outil selon l'une quelconque des revendications précédentes, sur laquelle l'entraînement pour le déplacement des deux traverses (22, 30) et/ou des deux coulisseaux (36, 42) des supports de portique est conçu comme un entraînement de macro-mouvement et de micro-mouvement superposé.

36. Machine-outil selon l'une quelconque des revendications précédentes, sur laquelle les entraînements sont conçus comme des entraînements à broche filetée sphérique.

37. Machine-outil selon l'une quelconque des revendications 1 à 35, sur laquelle les entraînements sont conçus comme des entraînements directs.
